# EUROPEAN PATENT APPLICATION

(11) **EP 4 510 362 A1**
(43) Date of publication of application: **19.02.2025**
(21) Application number: 22951719.8
(22) Date of filing: 13.09.2022
(51) Int. Cl.: H01M 50/531

(54) **BATTERY CELL, BATTERY AND ELECTRIC DEVICE**

(30) Priority: 20.07.2022 CN 202221866312 U
(71) Applicant: Contemporary Amperex Technology (Hong Kong) Limited, Central, Central And Western District (HK)
(72) Inventor: LIU, Yanyu, Ningde City, Fujian 352100 (CN); ZHENG, Yulian, Ningde City, Fujian 352100 (CN); HUANG, Shoujun, Ningde City, Fujian 352100 (CN); CHEN, Xinxiang, Ningde City, Fujian 352100 (CN); CHEN, Long, Ningde City, Fujian 352100 (CN); LIN, Denghua, Ningde City, Fujian 352100 (CN); WANG, Peng, Ningde City, Fujian 352100 (CN)
(74) Representative: Thoma, Michael
(86) International application number: PCT/CN2022/118495
(87) International publication number: WO 2024/016453

(57) **Abstract**

This application provides a battery cell, a battery, and an electrical device. A battery cell, including a top cover assembly and an adapter component, where the top cover assembly includes a mounting hole, and the mounting hole penetrates the top cover assembly along a first direction. The adapter component includes a base portion and a connecting portion that protrudes beyond the base portion. The connecting portion is disposed in the mounting hole and spaced apart from the mounting hole. The top cover assembly includes the mounting hole that penetrates the top cover assembly along the first direction, and the mounting hole is configured to accommodate the adapter component. The adapter component is configured to connect an electrode assembly to an electrode terminal in the battery cell. The adapter component includes the base portion and the connecting portion that protrudes beyond the base portion, and the connecting portion is disposed in the mounting hole and is spaced apart from the mounting hole. **In** a process of welding the adapter component to the electrode terminal, even if the adapter component wobbles, heat transferred to the top cover assembly through the adapter component is relatively low due to a clearance between the adapter component and the mounting hole, thereby reducing the probability of the top cover assembly deforming or failing due to heat, and improving the lifespan and performance of the battery.

## Description

### CROSS-REFERENCE TO RELATED APPLICATIONS

This application claims priority to Chinese Patent Application No. 202221866312.7, filed on July 20, 2022 and entitled "BATTERY CELL, BATTERY, AND ELECTRICAL DEVICE", which is incorporated herein by reference in its entirety.

### TECHNICAL FIELD

This application relates to the field of batteries, and in particular, to a battery cell, a battery, and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

An adapter component is typically disposed in a battery. The adapter component is configured to be electrically connected to a top cover assembly and an electrode assembly, but the adapter component may cause a decline in the lifespan and performance of the battery.

### SUMMARY

This application provides a battery cell, a battery, and an electrical device to alleviate the problem that the lifespan and performance of the battery are reduced by the adapter component.

According to a first aspect, this application provides a battery cell, including a top cover assembly and an adapter component. The top cover assembly includes a mounting hole. The mounting hole penetrates the top cover assembly along a first direction. The adapter component includes a base portion and a connecting portion that protrudes beyond the base portion. The connecting portion is disposed in the mounting hole and spaced apart from an internal wall face of the mounting hole.

In the technical solution in an embodiment of this application, the battery cell includes a top cover assembly and an adapter component. The top cover assembly includes the mounting hole that penetrates the top cover assembly along the first direction, and the mounting hole is configured to accommodate the adapter component. The adapter component is configured to connect an electrode assembly to an electrode terminal in the battery cell. The adapter component includes the base portion and the connecting portion that protrudes beyond the base portion, and the connecting portion is disposed in the mounting hole and is spaced apart from the mounting hole. In a process of welding the adapter component to the electrode terminal, even if the adapter component wobbles, heat transferred to the top cover assembly through the adapter component is relatively low due to a clearance between the adapter component and the mounting hole, thereby reducing the probability of the top cover assembly deforming or failing due to heat, and improving the lifespan and performance of the battery.

In some embodiments, a minimum distance between the connecting portion and the mounting hole is L, where L is greater than or equal to 0.1 mm.

In the technical solution in these embodiments of this application, the minimum distance L between the connecting portion and the mounting hole is greater than or equal to 0.1 mm, thereby alleviating the problem that the top cover assembly deforms or fails due to heat because the distance between the adapter component and the mounting hole is overly short, and because the wobbling of the adapter component makes a large amount of welding heat be conducted into the top cover assembly through the adapter component during welding between the adapter component and the electrode terminal, and in turn, improving the battery performance.

In some embodiments, the connecting portion includes a top wall and a sidewall. The top wall is oriented away from the base portion and parallel to the base portion. The sidewall surrounds the top wall and is connected between the top wall and the base portion.

In the technical solution in these embodiments of this application, the connecting portion includes the top wall and the sidewall, and the top wall is oriented away from the base portion and parallel to the base portion. The top wall is configured to be connected to the electrode terminal to output current to the outside. The sidewall surrounds the top wall and is connected between the top wall and the base portion. The sidewall provides support for the top wall.

In some embodiments, a minimum distance L₁ between an edge of the top wall and the mounting hole is 0.1 mm to 0.5 mm.

In the technical solution in an embodiment of this application, the top wall is a region of welding connection between the adapter component and the electrode terminal. The minimum distance L₁ between the edge of the top wall and the mounting hole is 0.1 mm to 0.5 mm, thereby alleviating the problem of damage to the top cover assembly caused by the wobbling of the adapter component during welding when the distance between the edge of the top wall and the mounting hole is overly short, and also alleviating the problem of a decline in the energy density of the battery caused by an excessive distance between the edge of the top wall and the mounting hole.

In some embodiments, a connecting region between the sidewall and the base portion is a raised region. A minimum distance L₂ between the raised region and the mounting hole is 0.8 mm to 1.2 mm.

In the technical solution in an embodiment of this application, the distance between the edge of the raised region and the mounting hole is 0.8 mm to 1.2 mm, thereby alleviating the problem of collision and crushing of the adapter component against the top cover assembly caused by a low alignment precision during loading of the adapter component due to an overly short distance between the edge of the raised region and the mounting hole, and also alleviating the problem of a decline in the energy density of the battery caused by an excessive distance between the edge of the raised region and the mounting hole.

In some embodiments, the top wall includes a first surface and a second surface disposed opposite to each other along the first direction, and the first surface is located on a side farther away from the base portion than the second surface. A welding region is disposed on the second surface. A diameter of the welding region is d₁, and a diameter of the second surface is C, satisfying: C ≥ d₁ + 2 × L₁.

In the technical solution in these embodiments of this application, the top wall includes a second surface close to the base portion. There is a welding region in the second surface. The diameter of the welding region is d₁, and the diameter C of the second surface satisfies C ≥ d₁ + 2 × L₁, thereby alleviating the problem of a decline in the welding effect caused by the wobbling of the adapter component during the welding due to an overly small diameter of the second surface.

In some embodiments, the diameter C of the second surface is greater than or equal to 10 mm.

In the technical solution in an embodiment of this application, the diameter C of the second surface is greater than or equal to 10 mm, thereby alleviating the problem that the diameter of the second surface is overly small and leads to an undersized connecting region and insufficient connection strength between the top wall and the electrode terminal.

In some embodiments, the connecting portion further includes a sidewall connected to the top wall and the base portion. An angle θ formed between the base portion and the sidewall and located near the mounting hole is an obtuse angle.

In the technical solution in these embodiments of this application, when the angle formed between the base portion and the sidewall and located near the mounting hole is an obtuse angle, the adsorption force between two adapter components is relatively low, thereby alleviating the problem of stacking of adapter components and alleviating the problem of loading jamming caused by stacking of adapter components.

In some embodiments, an angle θ formed between the base portion and the sidewall and located near the mounting hole is greater than or equal to 105°.

In the technical solution in these embodiments of this application, the angle formed between the base portion and the sidewall and located near the mounting hole is greater than or equal to 105°, thereby alleviating the problem of stacking and loading jamming of the adapter components caused by an undersized angle between the base portion and the sidewall.

In some embodiments, a diameter of the first surface is B, a diameter of the raised region is A, a height of the adapter component in a thickness direction of the base portion is H, satisfying: B = A - 2 × H × cot(180 - θ)°.

In the technical solution in these embodiments of this application, the diameter of the first surface is B, satisfying: B = A - 2 × H × cot(180 - θ)°. In this case, the angle formed between the sidewall and the base portion is an obtuse angle, and the adsorption force between two adapter components is relatively low, thereby alleviating the problem of stacking of adapter components and alleviating the problem of loading jamming caused by stacking of adapter components.

In some embodiments, a thickness of the adapter component is W, and the diameter of the second surface is C, satisfying: C = (A - 2W) - 2 × (H - W) × cot(180 - θ)°.

In the technical solution in these embodiments of this application, the diameter C of the second surface satisfies: C = (A - 2W) - 2 × (H - W) × cot(180 - θ)°. In this case, the angle formed between the sidewall and the base portion is an obtuse angle, and the adsorption force between two adapter components is relatively low, thereby alleviating the problem of stacking of adapter components and alleviating the problem of loading jamming caused by stacking of adapter components.

In some embodiments, the battery cell further includes a housing and an electrode assembly. The top cover assembly is disposed at an opening of the housing. The electrode assembly is located in the housing. The electrode assembly includes an electrode body as well as a first tab and a second tab that extend from the electrode body toward the top cover assembly. The first tab and the second tab are electrically connected to the top cover assembly by the adapter component.

In the technical solution in these embodiments of this application, the battery cell further includes a housing and an electrode assembly, and the electrode assembly includes a first tab and a second tab. The first tab and the second tab are electrically connected to the top cover assembly by the adapter component.

According to another aspect, this application further provides a battery. The battery includes the battery cell disclosed in any one of the embodiments of the first aspect.

According to still another aspect, this application further provides an electrical device. The electrical device includes the battery disclosed in the above embodiment. The battery is configured to provide electrical energy.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

The following describes features, advantages, and technical effects of exemplary embodiments of this application with reference to accompanying drawings.
FIG. 1 is a schematic structural diagram of a vehicle according to an embodiment of this application;
FIG. 2 is a schematic structural diagram of a battery pack according to an embodiment of this application;
FIG. 3 is a schematic structural diagram of a battery module according to an embodiment of this application;
FIG. 4 is a schematic exploded view of a battery cell according to an embodiment of this application;
FIG. 5 is a top view of a top cover assembly of a battery cell according to an embodiment of this application;
FIG. 6 is a cross-sectional view of sectioning along an A-A line shown in FIG. 5;
FIG. 7 is a close-up view of a part B shown in FIG. 6;
FIG. 8 is a schematic structural diagram of an adapter component of a battery cell according to an embodiment of this application;
FIG. 9 is a top view of an adapter component of a battery cell according to an embodiment of this application;
FIG. 10 is a close-up view of a part C shown in FIG. 8; and
FIG. 11 is a schematic structural diagram of a battery cell according to an embodiment of this application.

List of reference numerals:
1. vehicle; 2. battery; 11. controller; 12. motor;
2. battery; 21. battery module; 22. box; 221. first box portion; 222. second box portion;
3. battery cell; 31. top cover assembly; 32. housing; 33. electrode assembly; 331. tab; 332. electrode body; 3311. first tab; 3312. second tab; 311. electrode terminal; 34. insulation piece; 35. adapter component; 312. top cover plate; 313. mounting hole; 351. base portion; 352. connecting portion; 3521. top wall; 3522. sidewall; 3521a. first surface; 3521b. second surface; 353. raised region; 3523. welding region; 3524. buffer zone.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned apparatus or component is necessarily located in the specified direction and position or constructed or operated in the specified direction and position. Therefore, such terms are not to be understood as a limitation on this application. In addition, the terms "first" and "second" are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the expansion of the application fields of the power batteries.

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell. The battery cell may be in various shapes such as cylindrical, flat, cuboidal or other shapes. The shape of the battery cell is not limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. The positive active material layer overlays a surface of the positive current collector. The positive current collector includes a positive current collecting portion and a positive tab connected to the positive current collecting portion. The positive current collecting portion is coated with a positive active material layer, and the positive tab is not coated with the positive active material layer. Using a lithium-ion battery as an example, the positive current collector may be made of aluminum. The positive active material layer includes a positive active material. The positive active material may be lithium cobalt oxide, lithium iron phosphate, ternary lithium, lithium manganese oxide, or the like. The negative electrode plate includes a negative current collector and a negative active material layer. The negative active material layer is applied onto a surface of the negative current collector. The negative current collector includes a negative current collecting portion and a negative tab connected to the negative current collecting portion. The negative current collecting portion is coated with a negative active material layer, and the negative tab is not coated with the negative active material layer. The negative current collector may be made of copper. The negative active material layer includes a negative active material. The negative active material may be carbon, silicon, or the like. The separator may be made of a material such as PP (polypropylene, polypropylene) or PE (polyethylene, polyethylene).

The applicant hereof is aware that some battery cells incur the problem of a low lifespan and low performance.

In order to alleviate the problem of a low lifespan and low performance of the battery cell, the applicant hereof finds through research that an adapter component needs to be disposed between the tab and the electrode terminal to implement electrical connection. However, the adapter component and the electrode terminal are fixed together by welding. During the welding, the adapter component may wobble. With the wobbling of the adapter component, the distance between the adapter component and the insulation piece changes. Consequently, the welding heat is transferred to the insulation piece through the adapter component, thereby causing the insulation piece to deform or burn, reducing or losing the sealing effect and insulation effect of the separation piece, and in turn, leading to a series of problems such as electrolyte leakage and short-circuiting in the battery, and resulting in a decline in the lifespan and performance of the battery cell.

In view of the above situation, in order to solve the problem of a decline in the lifespan and performance of the battery cell, the inventor hereof realizes that the positional relationship between the insulation piece and the adapter component needs to be improved. The applicant hereby designs a battery cell through in-depth research. In such a battery cell, a minimum distance between the connecting portion of the adapter component and the insulation piece is not less than 0.1 mm. The minimum distance between the connecting portion and the insulation piece is relatively large. In a process of welding the adapter component to the electrode terminal, even if the adapter component wobbles, heat transferred to the insulation piece through the adapter component is relatively low due to a sufficient distance between the adapter component and the insulation piece, thereby reducing the probability of the insulation piece deforming or failing due to heat, and improving the lifespan and performance of the battery.

The technical solution described in this embodiment of this application is applicable to a battery and an electrical device that uses the battery.

The electrical device may be a vehicle, a mobile phone, a portable device, a notebook computer, a ship, a spacecraft, an electric toy, an electric tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in embodiments of this application.

Understandably, the technical solutions described in an embodiment of this application are not only applicable to the battery and electrical device described above, but also applicable to all batteries containing a box and all electrical devices powered by a battery. However, for brevity, the following embodiments are described by using an electric vehicle as an example.

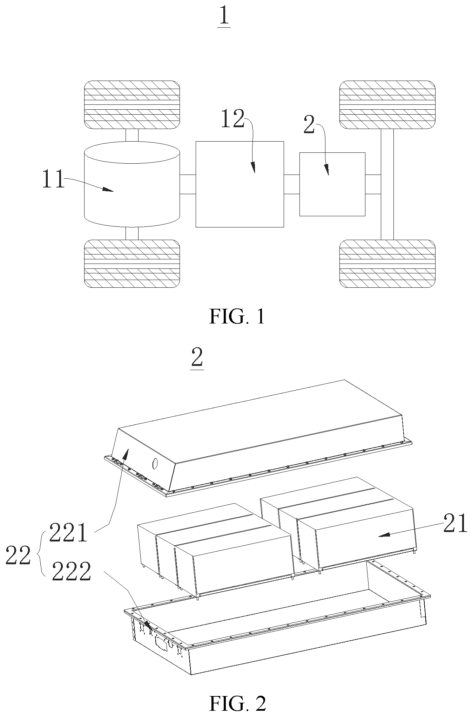

Referring to FIG. 1, FIG. 1 is a schematic structural diagram of a vehicle 1 according to some embodiments of this application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A battery 2 is disposed inside the vehicle 1. The battery 2 may be disposed at the bottom, front, or rear of the vehicle 1. The battery may be configured to supply power to the vehicle 1. For example, the battery may serve as an operating power supply of the vehicle 1. The vehicle 1 may further include a controller 11 and a motor 12. The controller 11 is configured to control the battery to supply power to the motor 12, for example, to meet electrical energy requirements in starting, navigating, or running the vehicle 1.

In some embodiments of this application, the battery not only serves as an operating power supply of the vehicle 1, but may also serve as a driving power supply of the vehicle 1 to provide driving power for the vehicle 1 in place of or partly in place of fuel oil or natural gas.

To meet different power use requirements, the battery may include a plurality of battery cells. A battery cell is a minimum unit that makes up a battery module or battery pack. A plurality of battery cells may be connected together in series and/or parallel through electrode terminals, so as to be applied in various scenarios. A battery referred to herein includes a battery module or a battery pack. The plurality of battery cells may be connected in series, parallel, or series-and-parallel pattern. The series-and-parallel pattern means a combination of series connection and parallel connection. In embodiments of this application, the plurality of battery cells may directly make up a battery pack, or form a battery module before a plurality of battery modules make up a battery pack.

FIG. 2 is a schematic structural diagram of a battery 2 according to an embodiment of this application.

As shown in FIG. 2, the battery 2 includes a box 22 and a battery cell (not shown in the drawing). The battery cell is accommodated in the box 22.

The box 22 may be a simple three-dimensional structure such as a stand-alone cuboid or cylinder or sphere, or may be a complex three-dimensional structure compounded of simple three-dimensional structures such as cuboids, cylinders or spheres, without being limited herein. The material of the box 22 may be an alloy material such as aluminum alloy or iron alloy, or a polymer material such as polycarbonate or polyisocyanurate foam plastic, or a composite material compounded of glass fiber and epoxy resin, without being limited herein.

The box 22 is configured to accommodate the battery cell. The box 22 may be one of various structures. In some embodiments, the box 22 may include a first box portion 221 and a second box portion 222. The first box portion 221 and the second box portion 222 cap off each other. The first box portion 221 and the second box portion 222 together define an accommodation space configured to accommodate the battery cell. The second box portion 222 may be a hollow structure opened at one end. The first box portion is a plate structure. The first box portion 221 caps off the opening of the second box portion 222 to form the box 22 that includes the accommodation space. Alternatively, the first box portion 221 and the second box portion 222 each may be a hollow structure opened at one end. The opening of the first box portion 221 caps off the opening of the second box portion 222 to form the box 22 that includes the accommodation space. Definitely, the first box portion 221 and the second box portion 222 may be in various shapes, such as a cylinder or a cuboid.

To improve airtightness between the first box portion 221 and the second box portion 222 that are connected, a sealing element such as a sealant or a sealing ring may be disposed between the first box portion 221 and the second box portion 222.

Assuming that the first box portion 221 fits on the top of the second box portion 222, the first box portion 221 may also be referred to as an upper box, and the second box portion 222 may also be referred to as a lower box.

The battery may contain one or more battery cells. If there are a plurality of battery cells, the plurality of battery cells may be connected in series, parallel, or series-and-parallel pattern. The series-and-parallel pattern means a combination of series connection and parallel connection of the plurality of battery cells. The plurality of battery cells may be directly connected in series, parallel, or series-and-parallel pattern, and then the whole of the plurality of battery cells may be accommodated in the box 22. Alternatively, the plurality of battery cells may be connected in series, parallel, or series-and-parallel pattern to form a battery module 21, and then a plurality of battery modules 21 are connected in series, parallel, or series-and-parallel pattern to form a whole for being accommodated in the box 22.

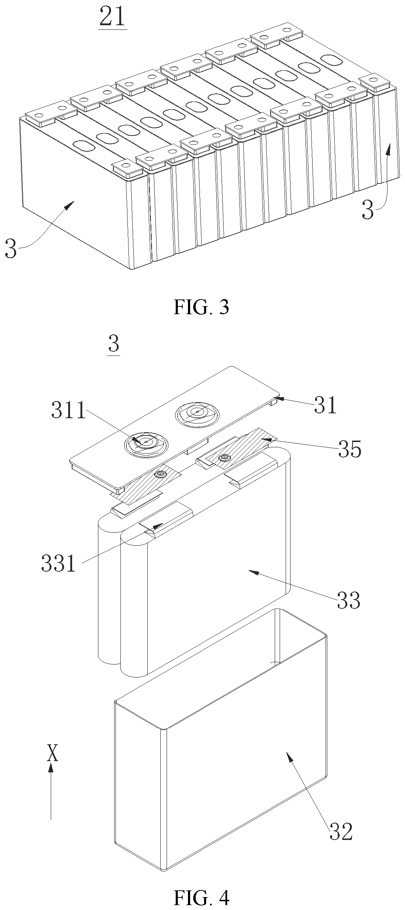

FIG. 3 is a schematic structural diagram of a battery module 21 according to an embodiment of this application.

In some embodiments, as shown in FIG. 3, there are a plurality of battery cells 3. The plurality of battery cells are connected in series, parallel, or series-and-parallel pattern to form a battery module 21 first. A plurality of battery modules 21 are then connected in series, parallel, or series-and-parallel pattern to form a whole for being accommodated in the box.

The plurality of battery cells 3 in the battery module 21 may be electrically connected by a busbar component, so as to implement parallel, series, or series-and-parallel connection between the plurality of battery cells 3 in the battery module 21.

In this application, the battery cell 3 may be a lithium-ion battery cell 3, a sodium-ion battery cell 3, a magnesium-ion battery cell 3, or the like. The type of the battery cell is not limited herein. The battery cell 3 may be in a cylindrical shape, a flat shape, a cuboidal shape, or other shapes, without being limited herein. Depending on the form of packaging, the battery cell 3 is typically classed into three types: cylindrical battery cell 3, prismatic battery cell 3, and pouch-type battery cell 3, without being limited herein. For brevity, the following embodiments are described by using a prismatic cell 3 as an example.

FIG. 4 is a schematic structural exploded view of a battery cell 3 according to some embodiments of this application. The battery cell 3 is a minimum unit of a battery. As shown in FIG. 4, the battery cell 3 includes a housing 32, an electrode assembly 33 located in the housing 32, and a top cover assembly 31 configured to cap off the opening of the housing 32.

The top cover assembly 31 is a component that fits and covers the opening of the housing 32 to isolate the internal environment of the battery cell 3 from the external environment. Without limitation, the shape of the top cover assembly 31 may be adapted to the shape of the housing 32 to fit the housing 32. Optionally, the top cover assembly 31 may be made of a material of appropriate hardness and strength (such as aluminum alloy), so that the top cover assembly 31 is not prone to deform when squeezed or impacted. In this way, the battery cell 3 achieves higher structural strength and higher safety performance. Functional components such as an electrode terminal 311 may be disposed on the top cover assembly 31. The electrode terminal 311 may be configured to be electrically connected to the electrode assembly 33 to output or input electrical energy of the battery cell 3. In some embodiments, a pressure relief mechanism configured to release an internal pressure when the internal pressure or temperature of the battery cell 3 reaches a threshold may be further disposed on the top cover assembly 31. The top cover assembly 31 may also be made of a variety of materials such as copper, iron, aluminum, stainless steel, aluminum alloy, or plastic, and the materials are not particularly limited herein. In some embodiments, an insulation piece (not shown in the drawing) may be further disposed on an inner side of the top cover assembly 31. The insulation piece may be configured to isolate an electrically connected component in the housing 32 from the top cover assembly 31 to reduce short-circuiting risks. The insulation piece may be plastic, rubber, or the like.

The housing 32 is a component configured to fit the top cover assembly 31 to form an internal environment of the battery cell 3. The formed internal environment may be used to accommodate the electrode assembly 33, an electrolyte solution (not shown in the drawing), and other components. The housing 32 and the top cover assembly 31 may be stand-alone components. An opening may be made on the housing 32. At the opening, the top cover assembly 31 caps off the opening to form the internal environment of the battery cell 3. Without limitation, the top cover assembly 31 and the housing 32 may be integrated instead. Specifically, the top cover assembly 31 and the housing 32 may form a common connection interface before other components are put into the housing. Subsequently, when the interior of the housing 32 needs to be sealed, the top cover assembly 31 is made to cap off the housing 32. The housing 32 may be in various shapes and sizes, such as a cuboid, cylinder, or hexagonal prism. Specifically, the shape of the housing 32 may depend on the specific shape and size of the electrode assembly 33. The housing 32 may be made of a variety of materials such as copper, iron, aluminum, stainless steel, aluminum alloy, or plastic, without being particularly limited herein.

The electrode assembly 33 is a component in which electrochemical reactions occur in the battery cell 3. The housing 32 may contain one or more electrode assemblies 33. The electrode assembly 33 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab 331. The positive tab and the negative tab may be located at one end of the body portion together or at two ends of the body portion respectively. In a charge-and-discharge process of the battery, the positive active material and the negative active material react with an electrolyte solution. The tabs 331 are connected to electrode terminals 311 to form a current circuit.

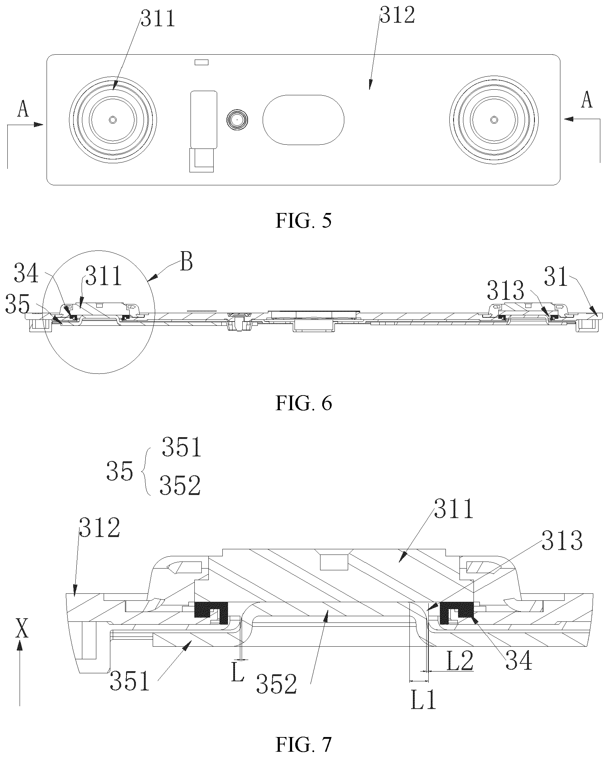

Referring to FIG. 5, FIG. 6, and FIG. 7, FIG. 5 is a top view of a top cover assembly of a battery cell according to an embodiment of this application; FIG. 6 is a cross-sectional view of sectioning along an A-A line shown in FIG. 5; and FIG. 7 is a close-up view of a part B shown in FIG. 6.

As shown in FIG. 4 to FIG. 7, it is sometimes not easy to electrically connect the tab 331 to the electrode terminal 311 directly. In this case, an adapter component 35 is usually disposed between the tab 331 and the electrode terminal 311. The tab 331 is electrically connected to the electrode terminal 311 by the adapter component 35. The adapter component 35 is typically connected to the electrode terminal 311 by welding. Optionally, the welding method may be laser welding, ultrasonic welding, friction welding, or the like.

In a process of welding the adapter component 35 to the electrode terminal 311, the top cover assembly 31 is positioned and fixed by a jig. The welding position is at the top cover plate 312, and a lower surface of the top cover plate is oriented upward. After the adapter component 35 is assembled in place, the adapter component is clamped against a lower end face of the electrode terminal 311 on the top cover plate 312. The adapter component 35 is welded to the top cover assembly 31 by laser welding or another welding method.

In a process of welding between the adapter component 35 and the electrode terminal 311, the adapter component 35 may wobble for the following reasons: the clamping device is not in place, the welding leads to an overly sharp temperature difference on the surface of the adapter component 35, the gas accumulates during the welding, and the like. The wobbling means irregular movement of the adapter component 35 away from the welding position.

An annular insulation piece 34 is disposed on an inner surface of the top cover plate 312, the inner surface being oriented toward the mounting hole 313. The adapter component 35 is typically connected to the electrode terminal 311 through a hole created on an inner coil of the insulation piece 34. When the adapter component 35 wobbles during welding, a part of the insulation piece 34 is overly close to the adapter component 35 in distance. Consequently, a large amount of heat generated during welding is transferred to the insulation piece through the adapter component 35. The insulation piece 34 is heated so that the shape or performance of the insulation piece changes, thereby resulting in a decline in the overall performance of the top cover assembly 31.

In some optional embodiments, as shown in FIG. 4 and FIG. 7, the battery cell 3 includes a top cover assembly 31 and an adapter component 35. The top cover assembly 31 includes a mounting hole 313. The mounting hole 313 penetrates the top cover assembly 31 along a first direction X. The adapter component 35 includes a base portion 351 and a connecting portion 352 that protrudes beyond the base portion 351. The connecting portion 352 is disposed in the mounting hole 313 and spaced apart from an inner wall face of the mounting hole 313.

Optionally, the first direction is the X direction.

The first direction X is a thickness direction of the top cover assembly 31.

The minimum distance between the connecting portion 352 and the mounting hole 313 may be a value of a fit clearance between the connecting portion 352 and the mounting hole 313.

The base portion 352 is in the shape of a flat plate. One end of the base portion 352 is connected to the tab (not shown in the drawing), and another end of the base portion 351 includes a raised connecting portion 352. The connecting portion 352 is connected to the electrode terminal 311.

Optionally, the connecting portion 352 is a hollow column or a hollow platform that protrudes beyond the base portion 351 and that includes a hole oriented toward the base portion 351.

Optionally, the adapter component 35 is made of metal and is obtained by machining or forging.

Optionally, the annular insulation piece 34 is disposed on an inner surface of the top cover plate 312, the inner surface being oriented toward the mounting hole 313. Because the insulation piece 34 is typically made of a polymer material, the insulation piece 34 is more prone to fail due to heat than other components in the top cover assembly 31. Therefore, the "clearance between the adapter component 35 and the mounting hole 313" may be expressed as the "clearance between the adapter component 35 and the insulation piece 34".

In the battery cell 3 disclosed in these embodiments of this application, the battery cell 3 includes a top cover assembly 31 and an adapter component 35. The top cover assembly 31 includes the mounting hole 313 that penetrates the top cover assembly 31 along the first direction X. The mounting hole 313 is configured to accommodate the adapter component 35. The adapter component 35 is configured to connect an electrode assembly 33 to an electrode terminal 311 in the battery cell 3. The adapter component 35 includes the base portion 351 and the connecting portion 352 that protrudes beyond the base portion 351, and the connecting portion 352 is disposed in the mounting hole 313 and is spaced apart from the mounting hole 313. In a process of welding the adapter component 35 to the electrode terminal 311, even if the adapter component 35 wobbles, heat transferred to the top cover assembly 31 through the adapter component 35 is relatively low due to a clearance between the adapter component 35 and the mounting hole 313, thereby reducing the probability of the top cover assembly 31 deforming or failing due to heat, and improving the lifespan and performance of the battery.

In some optional embodiments, as shown in FIG. 6 and FIG. 7, a minimum distance between the connecting portion 351 and the mounting hole 313 is L, where L is greater than or equal to 0.1 mm.

In these embodiments, the minimum distance L between the connecting portion 351 and the mounting hole 313 is greater than or equal to 0.1 mm, thereby alleviating the problem that the top cover assembly 31 deforms or fails due to heat because the distance between the adapter component 35 and the mounting hole 313 is overly short, and because the wobbling of the adapter component 35 makes a large amount of welding heat be conducted into the top cover assembly 31 through the adapter component 35 during welding between the adapter component 35 and the electrode terminal 311, and in turn, improving the battery performance.

In some optional embodiments, as shown in FIG. 6 and FIG. 7, the connecting portion 352 includes a top wall 3521 and a sidewall 3522. The top wall 3521 is oriented away from the base portion 351 and parallel to the base portion 351. The sidewall 3522 surrounds the top wall 3521 and is connected between the top wall 3521 and the base portion 351.

In these embodiments, the connecting portion 352 includes the top wall 3521 and the sidewall 3522, and the top wall 3521 is oriented away from the base portion 351 and parallel to the base portion 351. The top wall 3521 is configured to be connected to the electrode terminal 311 to output current to the outside. The sidewall 3522 surrounds the top wall 3521 and is connected between the top wall 3521 and the base portion 351. The sidewall 3522 provides support for the top wall 3521.

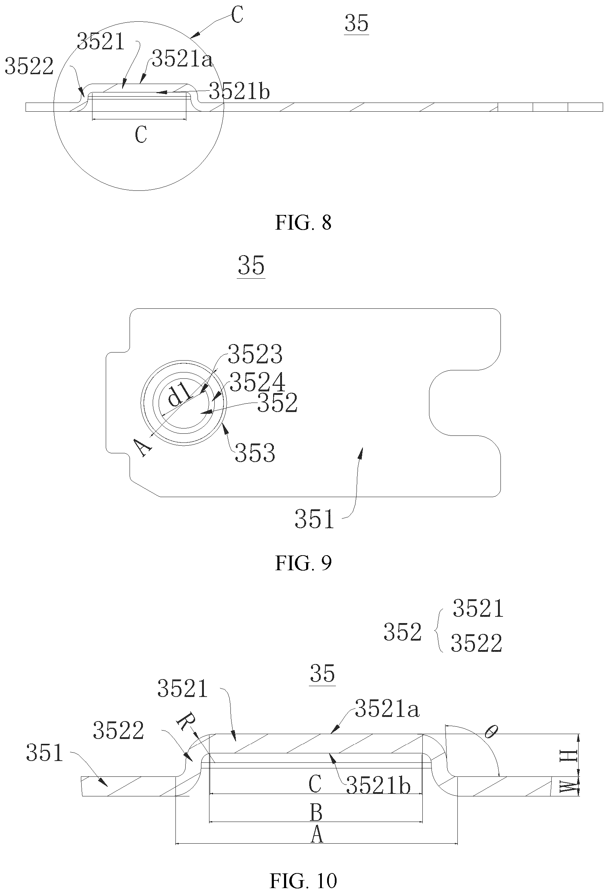

Referring to FIG. 8, FIG. 8 is a schematic structural diagram of an adapter component 35 of a battery cell according to an embodiment of this application.

In some optional embodiments, as shown in FIG. 7 and FIG. 8, a minimum distance L₁ between an edge of the top wall 3521 and the mounting hole 313 is 0.1 mm to 0.5 mm.

The top wall 3521 includes a first surface 3521a close to the electrode terminal 311. The edge of the top wall 3521 means an edge position in the first surface 3521a. When the top wall 3521 is transitionally connected to another part of the connecting portion 352 in the form of a fillet, the first surface 3521a means a part of the surface of the top wall 3521, the part being close to the electrode terminal 311 and abutting against the electrode terminal 311 during welding. In this case, the first surface 3521a does not include a part that does not abut against the electrode terminal 311 during welding due to the fillet design.

In these embodiments, the top wall 3521 is a region of welding connection between the adapter component 35 and the electrode terminal 311. The minimum distance L₁ between the edge of the top wall 3521 and the mounting hole 313 is 0.1 mm to 0.5 mm, thereby alleviating the problem of damage to the top cover assembly 31 caused by the wobbling of the adapter component 35 during welding when the distance between the edge of the top wall 3521 and the mounting hole 313 is overly short, and also alleviating the problem of a decline in the energy density of the battery caused by an excessive distance between the edge of the top wall 3521 and the mounting hole 313.

Referring to FIG. 9, FIG. 9 is a top view of an adapter component 35 of a battery cell according to an embodiment of this application.

In some optional embodiments, as shown in FIG. 7 to FIG. 9, a connecting region between the sidewall 3522 and the base portion 351 is a raised region 353. A minimum distance L₂ between the raised region 353 and the mounting hole 313 is 0.8 mm to 1.2 mm.

In these embodiments, the distance between the raised region 353 and the mounting hole 313 is 0.8 mm to 1.2 mm, thereby alleviating the problem of collision and crushing of the adapter component 35 against the top cover assembly (not shown in the drawing) caused by a low alignment precision during loading of the adapter component 35 due to an overly short distance between the raised region 353 and the mounting hole 313, and also alleviating the problem of a decline in the energy density of the battery caused by an excessive distance between the raised region 353 and the mounting hole 313.

In some optional embodiments, as shown in FIG. 8 and FIG. 9, the top wall 3521 includes a first surface 3521a and a second surface 3521b disposed opposite to each other along the first direction X. The first surface 3521a is located on a side farther away from the base portion 351 than the second surface 3521b. A welding region 3523 is disposed on the second surface 3521b. A diameter of the welding region 3523 is d₁, and a diameter of the second surface 3521b is C, satisfying: C ≥ d₁ + 2 × L₁.

Optionally, the welding region 3523 and the second surface 3521b are in the same shape.

When the second surface 3521b is connected to another part of the connecting portion 352 in the form of a fillet, the second surface 3521b does not include the fillet part.

The welding region 3523 lies in the second surface 3521b. During the welding such as laser welding, a laser beam irradiates the welding region 3523 to melt the welding region 3523. However, the adapter component 35 may wobble during the welding. In this case, the laser beam may deviate from the welding region and irradiate another region of the connecting portion, thereby causing cold solder joints or welding blowouts that impair the welding quality. Therefore, the diameter C of the second surface 3521b satisfies: C ≥ d₁ + 2 × L₁. In other words, a layer of buffer zone 3524 of a width not less than L₁ is disposed around the welding region 3523. The buffer zone 3524 can ensure that even if the adapter component 35 wobbles, the laser beam still irradiates the second surface 3521b, thereby reducing the possibility of cold solder joints and welding blowouts.

In these embodiments, the top wall 3521 includes a second surface 3521b close to the base portion 351. There is a welding region 353 in the second surface 3521b. The diameter of the welding region 353 is d₁, and the diameter C of the second surface 3521b satisfies C ≥ d₁ + 2 × L₁, thereby alleviating the problem of a decline in the welding effect caused by the wobbling of the adapter component 35 during the welding due to an overly small diameter of the second surface 3521b.

In some optional embodiments, as shown in FIG. 8 and FIG. 9, the diameter C of the second surface 3521b is greater than or equal to 10 mm.

In these optional embodiments, the diameter C of the second surface 3521b is greater than or equal to 10 mm, thereby alleviating the problem that the diameter of the second surface 3521b is overly small and leads to an undersized connecting region and insufficient connection strength between the top wall 3521 and the electrode terminal 311.

Referring to FIG. 10, FIG. 10 is a close-up view of a part C shown in FIG. 8.

In some optional embodiments, as shown in FIG. 10, the connecting portion 352 further includes a sidewall 3522 connected to the top wall 3521 and the base portion 351. An angle θ formed between the base portion 351 and the sidewall 3522 and located near the mounting hole 313 is an obtuse angle.

Generally, during production and processing, a plurality of adapter components 35 are stacked up. Due to the friction of the adapter components 35 and the action of atmospheric pressure, an adsorption force exists between two adjacent adapter components 35. When the plurality of adapter components 35 need to be gripped separately by mechanical equipment, the mechanical arm is prone to take out a plurality of adapter components 35 simultaneously due to the adsorption force between the adapter components 35. This poses safety hazards and causes scrapping or reworking of the battery if the adapter components are unable to be identified separately by the equipment subsequently.

In a case that the angle formed between the base portion 351 and the sidewall 3522 and located near the mounting hole 313 is an obtuse angle, in contrast to the status in which the angle between the base portion 351 and the sidewall 3522 is a right angle, air is more prone to enter the clearance between the two adapter components 35 to balance the air pressure between the two adapter components 35 when one of the adapter components 35 needs to be gripped, thereby reducing the adsorption force between the two adapter components 35 and alleviating the problem that the adapter components are undesirably stacked up.

In the technical solution in these embodiments of this application, when the angle between the base portion 351 and the sidewall 3522 is an obtuse angle, the adsorption force between two adapter components 35 is relatively low, thereby alleviating the problem of stacking of adapter components 35 and alleviating the problem of loading jamming caused by stacking of adapter components 35.

In some optional embodiments, as shown in FIG. 10, an angle θ formed between the base portion 351 and the sidewall 3522 and located near the mounting hole 313 is greater than or equal to 105°.

Optionally, the sidewall 3522 is sleekly connected to the top wall 3521, and the sidewall 3522 is sleekly connected to the base portion 351. With the sidewall 3522 sleekly connected to the top wall 3521, and the sidewall 3522 sleekly connected to the base portion 351, the sleek connection can disperse stress and reduce the probability of cracking at the junction between the sidewall 3522 and the top wall 3521 as well as the junction between the sidewall 3522 and the base portion 351.

In these optional embodiments, the angle formed between the base portion 351 and the sidewall 3522 and located near the mounting hole 313 is greater than or equal to 105°, thereby alleviating the problem of stacking and loading jamming of the adapter components 35 caused by an undersized angle between the base portion 351 and the sidewall 3522.

In some optional embodiments, as shown in FIG. 9 and FIG. 10, a diameter of the first surface 3521a is B, a diameter of the raised region 353 is A, a height of the adapter component 35 in a thickness direction of the base portion 351 is H, satisfying: B = A - 2 × H × cot(180 - θ)°.

When the first surface 3521a is transitionally connected to the sidewall 3522 in the form of a fillet and the sidewall 3522 is transitionally connected to the base portion 351 in the form of a fillet, the radius of the fillet is R, and the first surface 3521a does not include the fillet part. In this case, the diameter B of the first surface 3521a satisfies: B = A - 2 × H × cot(180 - θ) - 2 × R/sinθ°.

In the thickness direction of the base portion 351, the height H of the adapter component 35 means a distance from a surface of the base portion 351 on a side oriented toward the top cover assembly (not shown in the drawing) to the first surface 3521a in the first direction X.

In these optional embodiments, the diameter of the first surface 3521a is B, satisfying: B = A - 2 × H × cot(180 - θ)°. In this case, the angle formed between the sidewall 3522 and the base portion 351 is an obtuse angle, and the adsorption force between two adapter components 35 is relatively low, thereby alleviating the problem of stacking of adapter components 35 and alleviating the problem of loading jamming caused by stacking of adapter components 35.

In some optional embodiments, as shown in FIG. 9 and FIG. 10, a thickness of the adapter component 35 is W, and the diameter C of the second surface 3521b is C, satisfying: C = (A - 2W) - 2 × (H - W) × cot(180 - θ)°.

When the second surface 3521b is transitionally connected to the sidewall 3522 in the form of a fillet and the sidewall 3522 is transitionally connected to the base portion 351 in the form of a fillet, the radius of the fillet is R, and the second surface 3521b does not include the fillet part. In this case, the diameter C of the second surface 3521b satisfies: C = (A - 2W) - 2 × (H - W) × cot(180-θ)° - 2 × R/sinθ°.

In these optional embodiments, the diameter C of the second surface 3521b satisfies: C = (A - 2W) - 2 × (H - W) × cot(180 - θ)°. In this case, the angle formed between the sidewall 3522 and the base portion 351 is an obtuse angle, and the adsorption force between two adapter components 35 is relatively low, thereby alleviating the problem of stacking of adapter components 35 and alleviating the problem of loading jamming caused by stacking of adapter components 35.

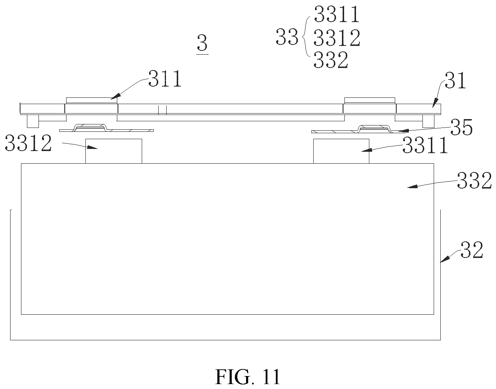

Referring to FIG. 11, FIG. 11 is a schematic structural diagram of a battery cell 3 according to an embodiment of this application.

In some optional embodiments, the battery cell 3 further includes a housing 32 and an electrode assembly 33. The top cover assembly 31 is disposed at an opening of the housing 32. The electrode assembly 33 is located in the housing 32. The electrode assembly 33 includes an electrode body 332 as well as a first tab 3311 and a second tab 3312 that extend from the electrode body 332 toward the top cover assembly. The first tab 3311 and the second tab 3312 are electrically connected to the electrode terminal 311 by the adapter component 35.

This technical solution is described by using a prismatic cell 3 as an example. In a prismatic cell, the electrode assembly 33 includes an electrode body 332 as well as a first tab 3311 and a second tab 3312 that extend from the electrode body 332 toward the top cover assembly 31. This technical solution is also applicable to a cylindrical cell. In a cylindrical cell, the electrode assembly 33 includes an electrode body 332 as well as a first tab 3311 and a second tab 3312 that extend from both ends of the electrode body 332 in a thickness direction of the electrode body, where the first tab 3311 is connected to the electrode terminal 311 by an adapter component 35, and the second tab 3312 is connected to the wall portion of the housing 32.

Optionally, the first tab 3311 is a positive tab, and the second tab 3312 is a negative tab.

In these optional embodiments, the battery cell 3 further includes a housing 32 and an electrode assembly 33. The electrode assembly 33 includes a first tab 3311 and a second tab 3312. The first tab 3311 and the second tab 3312 are electrically connected to the electrode terminal 311 by the adapter component 35.

An embodiment of this application further provides a battery. The battery includes the battery cell disclosed in the above embodiment.

The battery disclosed in this embodiment of this application employs the battery cell disclosed in the above embodiment, and therefore, achieves the same technical effects, the details of which are omitted here.

An embodiment of this application further provides an electrical device. The electrical device includes the battery disclosed in the above embodiment. The battery is configured to provide electrical energy.

The electrical device disclosed in this embodiment of this application employs the battery disclosed herein, and therefore, achieves the same technical effects, the details of which are omitted here.

According to some embodiments of this application, this application provides a battery cell. The battery cell includes a top cover assembly 31, an adapter component 35, an electrode assembly 33, and a housing 32. The top cover assembly 31 includes a mounting hole 313. The mounting hole 313 penetrates the top cover assembly 31 along a first direction.

The top cover assembly 31 is disposed at an opening of the housing 32. The electrode assembly 33 is located in the housing 32. The electrode assembly 33 includes an electrode body 332 as well as a first tab 3311 and a second tab 3312 that extend from the electrode body 332 toward the top cover assembly 31. The first tab 3311 and the second tab 3312 are electrically connected to the electrode terminal 311 by the adapter component 35.

The adapter component 35 includes a base portion 351 and a connecting portion 352 that protrudes beyond the base portion 351. At least a part of the connecting portion 352 is located in the mounting hole 313. The connecting portion 352 includes a top wall 3521 oriented away from the base portion 351. The top wall 3521 is connected to the electrode terminal 311. A minimum distance L₁ between an edge of the top wall 3521 and the mounting hole 313 is 0.1 mm to 0.4 mm.

An orthographic projection of the connecting portion 352 on the base portion 351 falls within a region that is a raised region 353. A distance between the edge of the raised region 353 and the mounting hole 313 is L₂, satisfying: 0.8 mm ≤ L₂ ≤ 1.2 mm.

The top wall 3521 includes a first surface 3521a and a second surface 3521b disposed opposite to each other along the thickness direction of the base portion 351. The first surface 3521a is located on a side of the second surface 3521b, the side being oriented away from the base portion 351. A welding region 3523 is disposed on the second surface 3521b. A diameter of the welding region 3523 is d₁, and a diameter of the second surface 3521b is C, satisfying: C ≥ d₁ + 2 × L₁. The diameter C of the second surface 3521b is not less than 10 mm.

The connecting portion 352 further includes a sidewall 3522 connected to the top wall 3521 and the base portion 351. An angle θ formed between the base portion 3521 and the sidewall 3522 is greater than or equal to 105°.

The diameter of the first surface 3521a is B, the diameter of the raised region 353 is A, the height of the adapter component 35 in the thickness direction of the base portion 351 is H, satisfying: B = A - 2 × H × cot(180 - θ)°. The thickness of the adapter component 35 is W, and the diameter of the second surface 3521b is C, satisfying: C = (A- 2W) - 2 × (H - W) × cot(180 - θ)°.

In these embodiments, the battery cell 3 includes a top cover assembly 31 and an adapter component 35. The top cover assembly 31 includes the mounting hole 313 that penetrates the top cover assembly 31 along the first direction X. The mounting hole 313 is configured to accommodate the adapter component 35. The adapter component 35 is configured to connect an electrode assembly 33 to an electrode terminal 311 in the battery cell 3. The adapter component 35 includes the base portion 351 and the connecting portion 352 that protrudes beyond the base portion 351, and the connecting portion 352 is disposed in the mounting hole 313 and is spaced apart from the mounting hole 313. In a process of welding the adapter component 35 to the electrode terminal 311, even if the adapter component 35 wobbles, heat transferred to the top cover assembly 31 through the adapter component 35 is relatively low due to a clearance between the adapter component 35 and the mounting hole 313, thereby reducing the probability of the top cover assembly 31 deforming or failing due to heat, and improving the lifespan and performance of the battery.

Although this application has been described with reference to exemplary embodiments, various improvements may be made to the embodiments without departing from the scope of this application, and the components of this application may be replaced with equivalents. Particularly, to the extent that no structural conflict exists, various technical features mentioned in various embodiments may be combined in any manner. This application is not limited to the specific embodiments disclosed herein, but includes all technical solutions falling within the scope of the claims.

## Claims

1. A battery cell, comprising:
a top cover assembly, wherein the top cover assembly comprises a mounting hole, and the mounting hole penetrates the top cover assembly along a first direction; and
an adapter component, comprising a base portion and a connecting portion that protrudes beyond the base portion, wherein the connecting portion is disposed in the mounting hole and spaced apart from an inner wall face of the mounting hole; and
a minimum distance between the connecting portion and the mounting hole is L, wherein L is greater than or equal to 0.1 mm.

2. The battery cell according to claim 1, wherein the connecting portion comprises:
a top wall, oriented away from the base portion and parallel to the base portion;
a sidewall, surrounding the top wall and connected between the base portion and the top wall.

3. The battery cell according to claim 2, wherein a minimum distance L₁ between an edge of the top wall and the mounting hole is 0.1 mm to 0.4 mm.

4. The battery cell according to claim 2 or 3, wherein a connecting region between the sidewall and the base portion is a raised region; and
a minimum distance L₂ between the raised region and the mounting hole is 0.8 mm to 1.2 mm.

5. The battery cell according to any one of claims 2 to 4, wherein the top wall comprises a first surface and a second surface disposed opposite to each other along the first direction, and the first surface is located on a side farther away from the base portion than the second surface; and
a welding region is disposed on the second surface, a diameter of the welding region is d₁, and a diameter of the second surface is C, satisfying: C ≥ d₁ + 2 × L₁.

6. The battery cell according to claim 5, wherein the diameter C of the second surface is greater than or equal to 10 mm.

7. The battery cell according to any one of claims 2 to 6, wherein an angle θ formed between the base portion and the sidewall and located near the mounting hole is an obtuse angle.

8. The battery cell according to any one of claims 2 to 7, wherein an angle θ formed between the base portion and the sidewall and located near the mounting hole is greater than or equal to 105°.

9. The battery cell according to any one of claims 5 to 7, wherein a diameter of the first surface is B, a diameter of the raised region is A, a height of the adapter component in a thickness direction of the base portion is H, satisfying: B = A - 2 × H × cot(180 - θ)°.

10. The battery cell according to claim 9, wherein a thickness of the adapter component is W, and the diameter of the second surface is C, satisfying: C = (A - 2W) - 2 × (H - W) × cot(180 - θ)°.

11. The battery cell according to any one of claims 1 to 10, further comprising:
a housing, wherein the top cover assembly is disposed at an opening of the housing; and
an electrode assembly, located in the housing, wherein the electrode assembly comprises an electrode body as well as a first tab and a second tab that extend from the electrode body toward the top cover assembly, and the first tab and the second tab are electrically connected to the top cover assembly by the adapter component.

12. A battery, comprising the battery cell according to any one of claims 1 to 11.

13. An electrical device, comprising the battery according to claim 12, wherein the battery is configured to provide electrical energy.
